# EUROPEAN PATENT APPLICATION

(11) **EP 4 625 036 A1**
(43) Date of publication of application: **01.10.2025**
(21) Application number: 25162020.9
(22) Date of filing: 06.03.2025
(51) Int. Cl.: G03B 3/10, G03B 35/10

(54) **LENS APPARATUS AND IMAGE PICKUP APPARATUS**

(30) Priority: 28.03.2024 JP 2024053735
(71) Applicant: CANON KABUSHIKI KAISHA, Tokyo 146-8501 (JP)
(72) Inventor: ITO, Hiroki, Tokyo, 146-8501 (JP)
(74) Representative: TBK

(57) **Abstract**

A lens apparatus (200) includes a first system (201R), a second system (201L) disposed in parallel with the first system, and a first drive unit (252) configured to move at least one of the first and second systems. Each of the first and second systems has, in order from an object side to an image side, a first axis (OA1R, OA1L), a second axis (OA2R, OA2L), and a third axis (OA3R, OA3L). A distance between the first axes of the first and second systems is longer than a distance between the third axes of the first and second systems. At least a part of the first drive unit is disposed between the first axis of the first system and the first axis of the second system when viewed from a top side of the lens apparatus.

## Description

### BACKGROUND

### Technical Field

The aspect of the embodiments relates to a lens apparatus and an image pickup apparatus.

### Description of Related Art

One conventional lens apparatus (stereoscopic imaging lens) includes two optical systems (bending optical systems) arranged in parallel, and is configured to form two image circles in parallel on a single image sensor. To capture images with parallax, focusing is to be performed for each of the two optical systems, and a focus position shift between the two optical systems is to be corrected by driving one of the optical systems. Japanese Patent Application Laid-Open No. 2023-37539 discloses a lens apparatus having a first focusing unit configured to simultaneously perform focusing for the two optical systems, and a second focusing unit configured to adjust a focus position shift between the two optical systems.

The lens apparatus disclosed in Japanese Patent Application Laid-Open No. 2023-37539 includes an actuator configured to drive one of the left-eye optical system and the right-eye optical system, and an actuator configured to integrally drive both the left-eye optical system and the right-eye optical system, so that the size of the lens apparatus increases.

### SUMMARY

The present disclosure in its first aspect provides a lens apparatus as specified in claims 1 to 17.

The present disclosure in its second aspect provides an image pickup apparatus as specified in claims 18 to 20.

Further features of various embodiments of the disclosure will become apparent from the following description of embodiments with reference to the attached drawings.

### BRIEF DESCRIPTION OF THE DRAWINGS

FIG. 1 is a sectional view of a lens apparatus according to a first embodiment.
FIG. 2 is an exploded perspective view of the lens apparatus according to the first embodiment.
FIG. 3 is an exploded perspective view of the lens apparatus according to the first embodiment.
FIG. 4 is a configuration diagram of the image pickup apparatus according to the first embodiment.
FIG. 5 is a layout diagram of optical axes and image circles on an image sensor in the first embodiment.
FIG. 6 is a side view of the lens apparatus according to the first embodiment.
FIG. 7 is a sectional view of the image pickup apparatus according to the first embodiment.
FIG. 8 is a front view of the lens apparatus according to the first embodiment.
FIG. 9 is a configuration diagram of an image pickup apparatus according to a second embodiment.
FIG. 10 is a sectional view of the image pickup apparatus according to the second embodiment.

### DETAILED DESCRIPTION

Referring now to the accompanying drawings, a detailed description of embodiments according to the disclosure will be given.

### FIRST EMBODIMENT

A description will now be given of a lens apparatus (interchangeable lens) 200 according to a first embodiment of the present disclosure. The lens apparatus 200 includes two optical systems (first optical system and second optical system) arranged in parallel (symmetrically), and is configured to form two image circles in parallel on a single image sensor. The two optical systems are arranged in the horizontal direction at a predetermined distance (base length). When viewed from the image side, an image formed by a right optical system (first optical system) is recorded as a moving image or still image for the right eye, and an image formed by a left optical system (second optical system) is recorded as a moving image or still image for the left eye.

In playing back a moving image or still image (image), a known three-dimensional display or so-called VR goggles is used for viewing, so that a right-eye video is projected on the right eye of the user (viewer), and a left-eye image is projected on the left eye of the user. At this time, images with parallax are projected on the right eye and the left eye due to the base length (first distance L1 between the optical axes) of the lens apparatus, so that the user can obtain a three-dimensional effect. Thus, the lens apparatus 200 according to this embodiment is a lens apparatus (stereoscopic imaging lens) for stereoscopic imaging that can form two images with parallax by the first optical system and the second optical system.

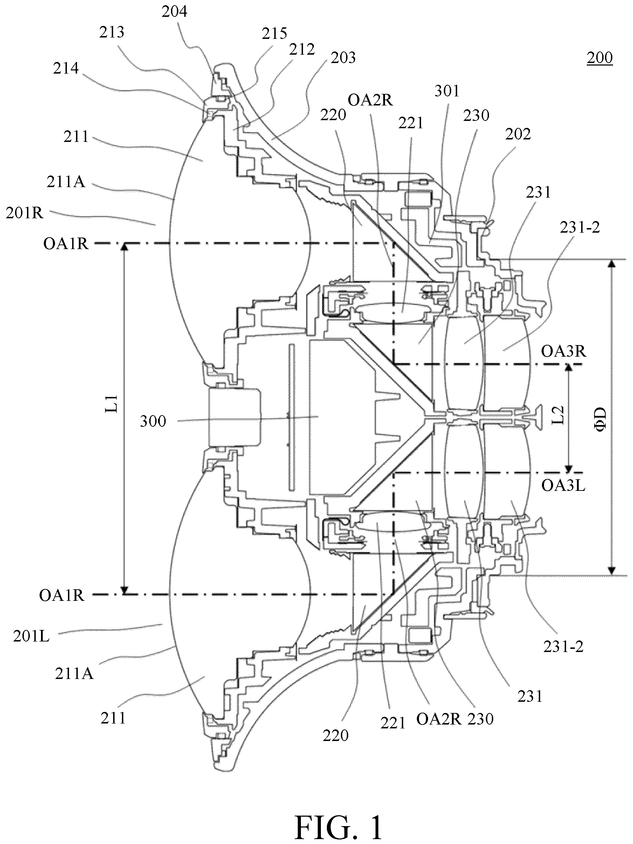

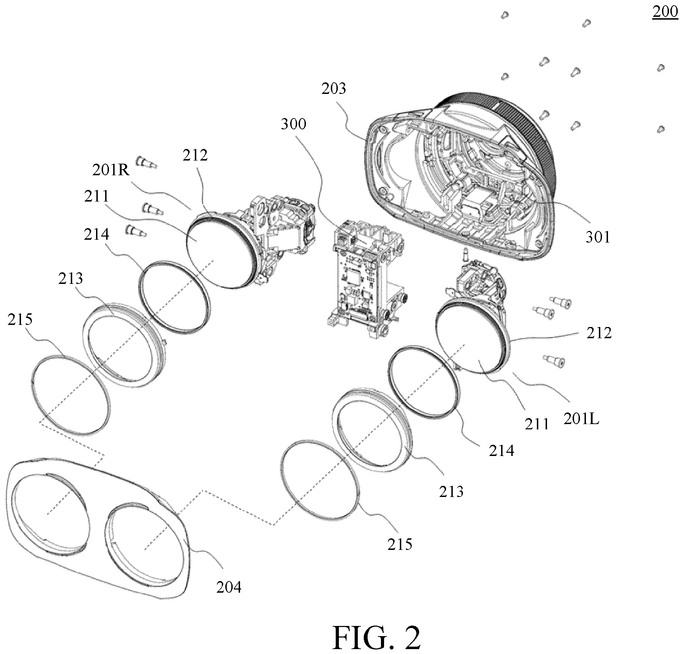

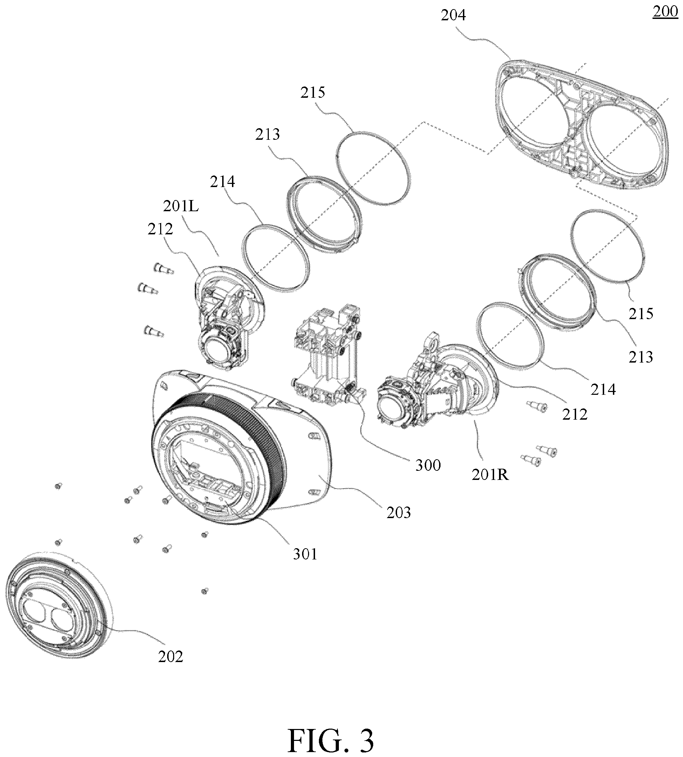

The lens apparatus 200 will be described with reference to FIGs. 1 to 3. FIG. 1 is a sectional view illustrating a schematic configuration of a right-eye optical system 201R and a left-eye optical system 201L in the lens apparatus 200. FIGs. 2 and 3 are exploded perspective views of the lens apparatus 200. In the following description, the right-eye optical system will add an R suffix to the reference numerals, and the left-eye optical system will add an L suffix to the reference numerals. Reference numerals common to both the right-eye optical system and the left-eye optical system will add neither R nor L suffix to the reference numerals.

The lens apparatus 200 includes the right-eye optical system (first optical system) 201R and the left-eye optical system (second optical system) 201L. Each of the right-eye optical system 201R and the left-eye optical system 201L is a so-called bending optical system having a plurality of orthogonal optical axes. Each of the right-eye optical system 201R and the left-eye optical system 201L includes, in order from the object side to the image side (imaging surface side), a first optical axis OA1, a second optical axis OA2 that is approximately orthogonal to the first optical axis OA1, and a third optical axis OA3 that is approximately parallel to the first optical axis OA1.

Along each optical axis, a first lens 211 having a surface 211A that is convex toward the object side is disposed on the first optical axis OA1, a second lens 221 is disposed on the second optical axis OA2, and third lenses 231 and 231-2 are disposed on the third optical axis OA3. The third lenses 231 and 231-2 are provided inside the lens mount 202.

Each of the right-eye optical system 201R and the left-eye optical system 201L includes a first prism 220 configured to bend a light beam of the first optical axis OA1 and guide it to the second optical axis OA2, and a second prism 230 configured to bend a light beam of the second optical axis OA2 and guide it to the third optical axis OA3. Thus, each of the right-eye optical system 201R and the left-eye optical system 201L is a bending optical system configured to bend an incident light beam twice. The optical axis direction refers to a direction of the first optical axis OA1, which is a direction extending from the object side to the image side.

The left-eye optical system 201L is fixed to a lens top base (base member) 300 by screws or the like. The right-eye optical system 201R is held freely movably in the optical axis direction relative to the lens top base 300 by a configuration described later. A lens bottom base 301 is held movably forward and backward in the optical axis direction while its movement in the rotational direction is restricted by an unillustrated linear structure. Due to this configuration, the right-eye optical system 201R and the left-eye optical system 201L can integrally move forward and backward in the optical axis direction. Thereby, the focus positions of the right-eye optical system 201R and the left-eye optical system 201L can be simultaneously adjusted.

In FIGs. 1 to 3, reference numeral 203 denotes an exterior cover member, reference numeral 204 denotes a front exterior member, reference numeral 212 denotes a first lens holding member, reference numeral 213 denotes a cover member, reference numeral 214 denotes an optical axis direction seal member, and reference numeral 215 denotes a radial direction seal member.

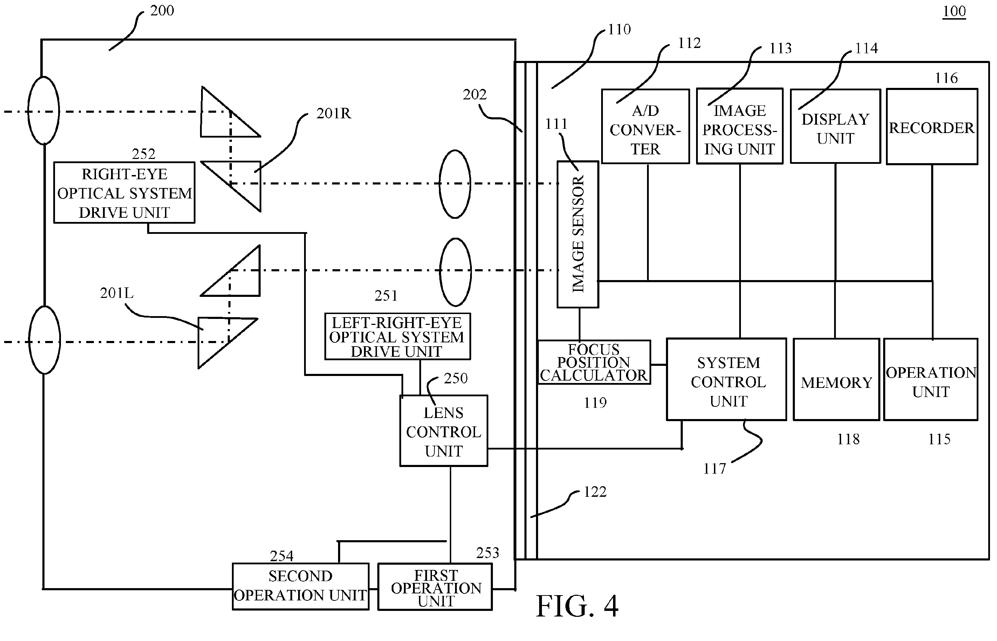

FIG. 4 is a schematic diagram of the image pickup apparatus 100 configured to capture a stereoscopic image. The image pickup apparatus 100 includes a camera body 110 and a lens apparatus 200. The lens apparatus 200 is an interchangeable lens attachable to and detachable from the camera body 110. This embodiment is not limited to this example, and can also be applied to an image pickup apparatus in which the camera body and the lens apparatus are integrated.

The lens apparatus 200 includes the right-eye optical system 201R and the left-eye optical system 201L that constitute the imaging optical system, and form two images with parallax on the image sensor 111 in the camera body 110. The lens apparatus 200 further includes a lens mount (lens mount unit) 202 for detachably mounted onto the camera body 110.

The camera body 110 includes the image sensor 111, an A/D converter 112, an image processing unit 113, a display unit 114, an operation unit 115, a recorder 116, a system control unit 117, a memory 118, and a camera mount 122. In a case where the lens apparatus 200 is mounted on the camera mount 122 of the camera body 110 via the lens mount 202, the system control unit 117 and the lens control unit 250 are electrically connected.

As object images, a right-eye image formed via the right-eye optical system 201R and a left-eye image formed via the left-eye optical system 201L are formed in parallel on the image sensor 111. The image sensor 111 is a photoelectric conversion element such as a Complementary Metal-Oxide-Semiconductor (CMOS) sensor, and converts the formed object images (optical signals) into an analog electrical signal. In this embodiment, the image sensor 111 is a single image sensor configured to form a first image formed by the right-eye optical system 201R and a second image formed by the left-eye optical system 201L in parallel.

The A/D converter 112 converts the analog electrical signal output from the image sensor 111 into a digital electrical signal (image signal). The image processing unit 113 performs various image processing for the digital electrical signal (image signal) output from the A/D converter 112.

The display unit 114 displays various information. The display unit 114 includes, for example, an electronic viewfinder or a liquid crystal panel. The operation unit 115 has a function as a user interface for the user to give instructions to the image pickup apparatus 100. In a case where the display unit 114 has a touch panel, the touch panel also constitutes one of the operation units 115. The recorder 116 records various data, such as image data that has been processed by the image processing unit 113, into a recording medium.

The system control unit 117 controls the entire image pickup apparatus 100. The system control unit 117 includes, for example, a CPU. Light taken in by the imaging optical system is imaged on the image sensor 111. In general, the formed image is taken in by the image sensor 111, and after various processes are performed by the A/D converter 112 or the image processing unit 113, it is configured as a captured image and written into a recording medium by the recorder 116. The memory 118 stores, for example, programs and parameters to be executed by the system control unit 117.

A focus position calculator 119 has a role of calculating and detecting a focus shift amount from an object from the image captured by the image sensor 111 through the lens apparatus 200. The images captured by the image sensor 111 are images captured by the right-eye optical system 201R and the left-eye optical system 201L. As described above, these images have parallax due to stereoscopic vision. A distance of each object in the captured image can be calculated from the parallax of these two images. An object distance can be calculated from each of the left and right images captured by the image sensor 111, but this method is well known and thus will not be described in detail here.

The system control unit 117 issues a lens drive command to the lens control unit 250 according to the focus shift amount calculated by the focus position calculator 119. The lens control unit 250 controls an optical system drive unit according to the lens drive command.

A right-eye optical system drive unit (first drive unit) 252 includes a first actuator 540, which will be described later, and drives the right-eye optical system 201R. The right-eye optical system drive unit 252 is provided on the lens top base 300, and the right-eye optical system 201R is movable relative to the lens top base 300. A left-right-eye optical system drive unit (second drive unit) 251 includes a second actuator 400, which will be described later, and drives the right-eye optical system 201R and the left-eye optical system 201L together. For example, in a case where each of the right-eye optical system 201R and the left-eye optical system 201L generates a focus shift amount, a driving command is given to the right-eye optical system drive unit 252 to drive the right-eye optical system 201R in accordance with the focus position of the fixed left-eye optical system 201L.

In a case where the right-eye optical system 201R and the left-eye optical system 201L are not focused on an object distance intended by the user, and a focus shift amount between the right-eye optical system 201R and the left-eye optical system 201L is within a predetermined amount, the focus position calculator 119 calculates the focus shift amount. The system control unit 117 calculates a command to be given to the lens control unit 250. The lens control unit 250, which has received the command from the system control unit 117, gives a drive command to the left-right-eye optical system drive unit 251, so that the right-eye optical system 201R and the left-eye optical system 201L are integrally driven to focus on the object distance intended by the user.

The lens apparatus 200 includes a first operation unit 253 and a second operation unit 254. The user can arbitrarily change an in-focus position relative to the object distance intended by the user by operating the first operation unit 253. The lens control unit 250 reads an operation amount of the first operation unit 253 by the user, and provides the left-right-eye optical system drive unit 251 with a drive amount according to the operation amount.

In a case where the user operates the second operation unit 254, the lens control unit 250 reads the operation amount and sends a drive amount command to the right-eye optical system drive unit 252. The right-eye optical system drive unit 252 drives the right-eye optical system 201R according to that drive amount. Due to this configuration, each of the right-eye optical system 201R and the left-eye optical system 201L can perform a focusing operation as intended by the user.

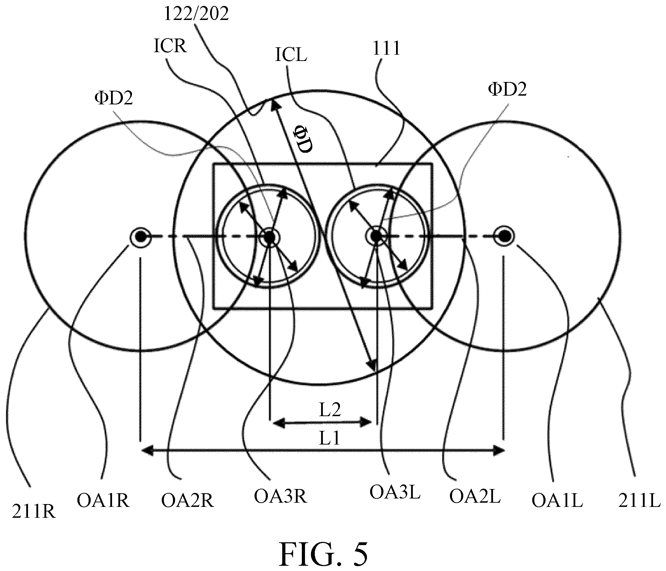

FIG. 5 illustrates a positional relationship among the optical axes, lens mount, camera mount, and image circles of the lens apparatus 200. On the image sensor 111, a right-eye image circle ICR with an effective angle of view formed by the right-eye optical system 201R and a left-eye image circle ICL with an effective angle of view formed by the left-eye optical system 201L form images in parallel. ΦD is a mount engagement diameter of the camera mount 122 and the lens mount 202.

The size (diameter) ΦD2 of each image circle and a distance between the image circles may be set so that the right-eye image circle ICR and the left-eye image circle ICL do not overlap each other. The distance between the image circles is a distance between the center of the right-eye image circle ICR and the center of the left-eye image circle ICL (the third distance L2 between the optical axes). For example, consider an area in which the light receiving range of the image sensor 111 is divided into left and right halves at the center, and set the center of the right-eye image circle ICR to be located approximately at the center of the right area of the light receiving range, and set the center of the left-eye image circle ICL to be located approximately at the center of the left area of the light receiving range. This configuration can provide images captured by the right-eye optical system 201R and the left-eye optical system 201L with the single image sensor 111.

For example, in a case where two image sensors are provided and images formed by the right-eye optical system 201R and the left-eye optical system 201L are captured by the two image sensors, the two obtained images may have different luminances or colors due to variations in the image sensors.

On the other hand, this embodiment captures the images of the two optical systems using the single image sensor 111, and images with small differences in luminance or color can be obtained. In order to avoid a size increase of the image pickup apparatus, the image circles of the two optical systems are arranged close to each other (adjacent to each other), and thereby imaging can be performed by making the most of the area of the image sensor 111. In a case where the distance between the image circles of the two optical systems (third distance L2 between the optical axes) reduces, space for a drive unit, which will be described later, runs short and thus this embodiment places the drive unit as described later.

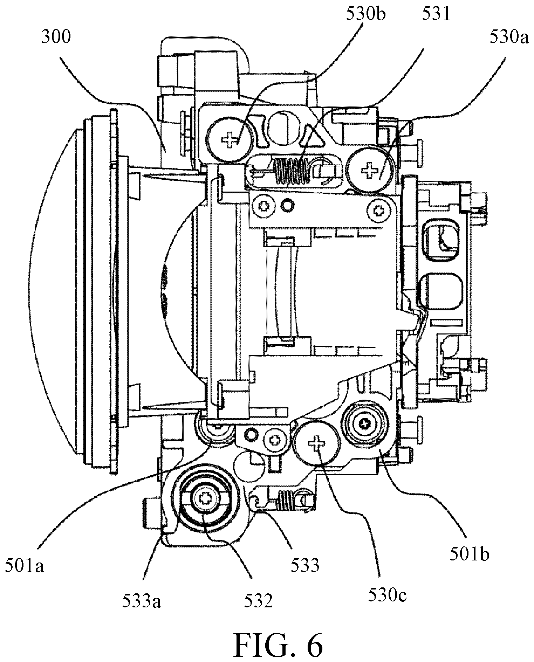

Referring now to FIG. 6, a description will be given of a method for adjusting a focus position shift between the right-eye optical system 201R and the left-eye optical system 201L. FIG. 6 is a side view of the lens apparatus 200, illustrating only the lens top base 300 and the right-eye optical system 201R in an assembled state.

In this embodiment, the left-eye optical system 201L is fixed to the lens top base (base member) 300 with screws 530 or the like. That is, the left-eye optical system 201L is held with clearance in the depth direction of the paper plane by lock screws 530a, 530b, and 530c.

On the other hand, the right-eye optical system 201R is held movably relative to the lens top base 300. That is, the right-eye optical system 201R is held movably in the left-right direction of the paper plane by two guide rollers 501a and 501b. The right-eye optical system 201R is positioned in the left-right direction of the paper plane by an eccentric collar 532. In a case where the eccentric collar 532 rotates, a position of a contact portion 533a that contacts a holding frame 533 that holds the right-eye optical system 201R shifts in the left-right direction on the paper plane. The right-eye optical system 201R and the lens top base 300 are biased by a spring 531, are constantly in contact with the contact portion 533a, and thereby maintain their positions with high accuracy.

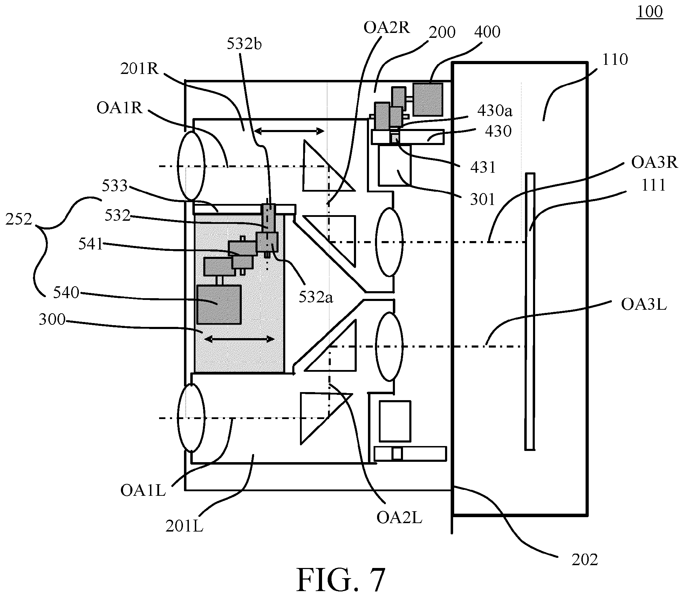

FIG. 7 is a sectional view of the image pickup apparatus 100, illustrating in detail the drive unit (drive mechanism) of the right-eye optical system 201R in the lens apparatus 200. The lens top base 300 constitutes a gear train to integrally drive the right-eye optical system 201R. In this embodiment, the right-eye optical system 201R does not drive only a part of the lenses that constitute the right-eye optical system 201R, but drives all lenses that constitute the right-eye optical system 201R as a whole.

Unlike this embodiment, in a case where only a part of the lenses is moved, the focal length of the optical system slightly changes, and the size of the image captured by each optical system may be different. As a result, in a case where a user views captured images with his left and right eyes, the images reflected on the right and left eyes may differ, and the user may feel uncomfortable in the stereoscopic effect.

The configuration of this embodiment can prevent a size difference between an image formed by the right-eye optical system 201R and an image formed by the left-eye optical system 201L in adjusting the focus position shift between the right-eye optical system 201R and the left-eye optical system 201L caused by the manufacturing errors.

In a case where the entire right-eye optical system 201R is driven as a whole, the mass of the drive unit increases, and thus a drive force increases in comparison with driving a part of the optical system. Thus, the entire right-eye optical system 201R becomes drivable in this embodiment by increasing the torque of the actuator using a deceleration structure using a gear train.

In FIG. 7, reference numeral 540 denotes a first actuator as a drive source in a first drive unit (first drive mechanism) that drives the right-eye optical system 201R. The first actuator 540 receives a command from the lens control unit 250 and performs rotational drive. The rotation of the first actuator 540 rotates a reduction gear 541 connected as one element constituting the first drive unit. In this embodiment, the reduction gear 541 is a one-stage reduction gear, but this embodiment is not limited to this example, and various configurations are applicable, such as providing a plurality of stages or a configuration using a worm gear.

The reduction gear 541 is connected to the eccentric collar 532 to generate a drive force for the right-eye optical system 201R. The eccentric collar 532 includes a gear portion 532a that contacts the rotation axis of the gear portion connected to the reduction gear 541, and an eccentric portion 532b that has an axis eccentric to the axis of the gear portion 532a and contacts the right-eye optical system 201R. The eccentric collar 532 is rotated by the torque transmitted by the above gear train, and the eccentric portion 532b is rotated, so that the right-eye optical system 201R can freely move in the left-right direction (optical axis direction) in FIG. 7.

Reference numeral 400 denotes a second actuator constituting a second drive unit (second drive mechanism) that integrally drives the right-eye optical system 201R and the left-eye optical system 201L. Similarly, the second actuator 400 has a large torque to integrally drive the two optical systems, so a large torque power is generated in a small actuator via a gear train. The gear train is connected to a cylindrical cam member 430 provided with a gear portion. The cam member 430 has a cam groove 430a into which a cam follower 431 is inserted. The cam member 430 rotates around the central axis of the cylinder as the rotation axis by the torque transmitted from the gear train. Thereby, the cam follower 431 that contacts the cam groove can move in the left-right direction in FIG. 7.

The cam follower 431 is connected to the lens bottom base 301. Since the lens bottom base 301 is integrally held with the cam follower 431, the lens bottom base 301 also moves according to the movement of the cam follower 431. The lens bottom base 301 and the lens top base 300 are integrally fixed. Thus, the left-eye optical system 201L fixed to the lens top base 300 and the right-eye optical system 201R held movably relative to the lens top base 300 can be driven integrally.

Here, the second actuator 400 and a part of the gear train (at least a part of the second drive unit) are disposed in an area on the image side of the second optical axis OA2 (on the image sensor 111 side of the second optical axis OA2).

In order to obtain a natural three-dimensional effect, a distance between the first optical axes OA1 (first distance L1 between the optical axes) is set to the same distance as the interpupillary distance of a human eye. A distance between the third optical axes OA3 (third distance L2 between the optical axes) is determined by the width of the image sensor 111, so the image pickup apparatus 100 according to this embodiment bends the optical axis in a crank shape. The image sensor 111 generally has a size smaller than the general interpupillary distance of a human. The distance between the first optical axes OA1 is set to be wider than the distance between the third optical axes OA3. Placing the second actuator 400 and a part of the gear train in the above space can reduce the size of the lens apparatus 200 (image pickup apparatus 100).

By driving the whole of the right-eye optical system 201R, the image pickup apparatus 100 according to this embodiment can reduce the image magnification fluctuation and the image magnification difference between the two optical systems. A large torque is to drive the optical systems with a large mass as a whole. As described above, this embodiment has a structure that generates a large drive force using a gear train. This embodiment can integrally capture the images of the two optical systems through the image sensor 111 and perform image processing for them. Thereby, in this configuration, a difference between left and right images are less likely to occur.

The size of the lens apparatus 200 can be reduced by a structure that reduces a distance between the two optical systems (third distance L2 between the optical axes) in order to form the images of the two optical systems in the effective area of the image sensor 111. In a case where a human views left and right images having parallax, he can view a natural three-dimensional image if images with parallax of about 60 mm, which is generally close to the human eye width, are captured. Thus, the distance between the first optical axes OA1R and OA1L of the two optical systems is set to a distance of about 60 mm. The distance between the third optical axes OA3R and OA3L of the two optical systems is shorter than the width of a typical image sensor 111, which is 36 mm. This distance difference is achieved by bending the optical axes using a reflective optical element such as a mirror or a prism.

This embodiment provides the second optical axes OA2R and OA2L to connect the first optical axes OA1R and OA1L and the third optical axes OA3R and OA3L. The third optical axes OA3R and OA3L are arranged so that the two image circles are adjacent to each other in order to effectively utilize the area of the image sensor 111. Thus, the lens diameters at the rearmost portions may be disposed close to each other (adjacent) in order to reduce the distance between the two image circles and to capture a large light amount into the effective areas of the image circles.

The distance between the first optical axes OA1R and OA1R is wider than the distance between the third optical axes OA3R and OA3L for the above reasons. This embodiment provides the gear train of the right-eye optical system drive unit 252 between the two first optical axes OA1R and OA1L on a plane (first plane) including the two first optical axes OA1R and OA1L. Thereby, the space for the gear train including a plurality of stages of gears configured to generate a large torque is to be provided in an area outside the optical system.

In order to reduce the size and overall length of the lens apparatus 200, the second optical axes OA2R and OA2L are disposed close to the image sensor 111. Thus, the miniaturization can be achieved by placing the gear train of the right-eye optical system drive unit 252 in an area on the object side of the second optical axes OA2R and OA2L on the first plane.

This embodiment will define an area between the first optical axis OA1R and the first optical axis OA1L (an area sandwiched between the first optical axes OA1R and OA1L) as the first area on the first plane including the first optical axes OA1R and OA1L of the two optical systems. More specifically, the first area is an area between the first optical axes OA1R and OA1L on the first plane and on the object side of the second optical axes OA2R and OA2L.

In this embodiment, at least a part of the right-eye optical system drive unit 252 including the first actuator 540 is disposed in the first area. At least a part of the left-right-eye optical system drive unit 251 including the second actuator 400 is disposed in an area different from the first area, that is, on the image side of the second optical axes on the first plane.

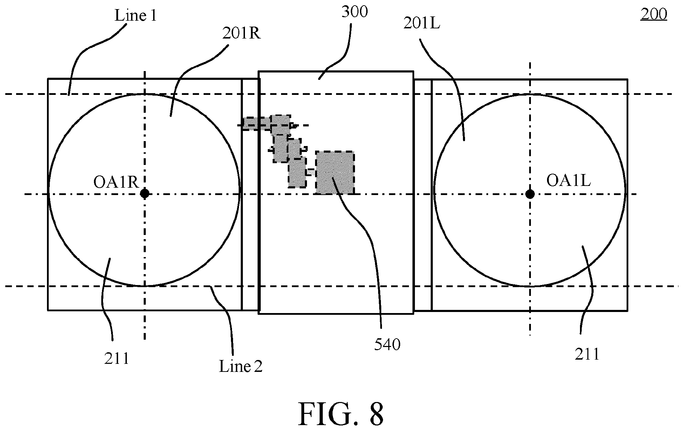

Referring now to FIG. 8, a description will be given of the arrangement of the first actuator 540 and the gear train. FIG. 8 is a front view of the lens apparatus 200 (viewed from directions along the first optical axes OA1R and OA1L), and illustrates a front view of the right-eye optical system 201R and the left-eye optical system 201L and an assembly state of the lens top base 300 when viewed from the object side.

Lines 1 and 2 are two tangents that contact the optical elements (first lenses 211) disposed closest to the object among the optical elements constituting the right-eye optical system 201R and the left-eye optical system 201L. That is, when viewed from the direction along the first optical axes OA1R and OA1L, Lines 1 and 2 are two tangents that connect points on the outer circumferences of the two optical elements (first lenses 211) disposed closest to the object in the right-eye optical system 201R and the left-eye optical system 201L. Lines 1 and 2 are parallel to a line connecting the first optical axis OA1R of the right-eye optical system 201R and the first optical axis OA1L of the left-eye optical system 201L.

As mentioned above, in order to secure a wide imaging area, the size of the foremost optical element (first lens 211) tends to increase. Accordingly, in order to reduce the size of the lens apparatus 200, this embodiment places the first actuator 540 and the gear train (at least a part of the first drive unit) in the area between Lines 1 and 2 (between the two Lines 1 and 2). The size of the lens apparatus 200 can be reduced.

In this embodiment, each of the right-eye optical system 201R and the left-eye optical system 201L is held by the lens top base 300 as a base member. As described above, the right-eye optical system 201R is supported movably, and the left-eye optical system 201L is fixed and supported. The lens top base 300 is disposed in the area between the first optical axis and the second optical axis, close to the lens on the object side, which is likely to have a large mass, to hold the two optical systems. This allows the two optical systems to be held while ensuring a good center of gravity balance. Disposing the first actuator 540 or the gear train in a partial area of the lens top base 300 can reduce the size of the lens apparatus 200.

### SECOND EMBODIMENT

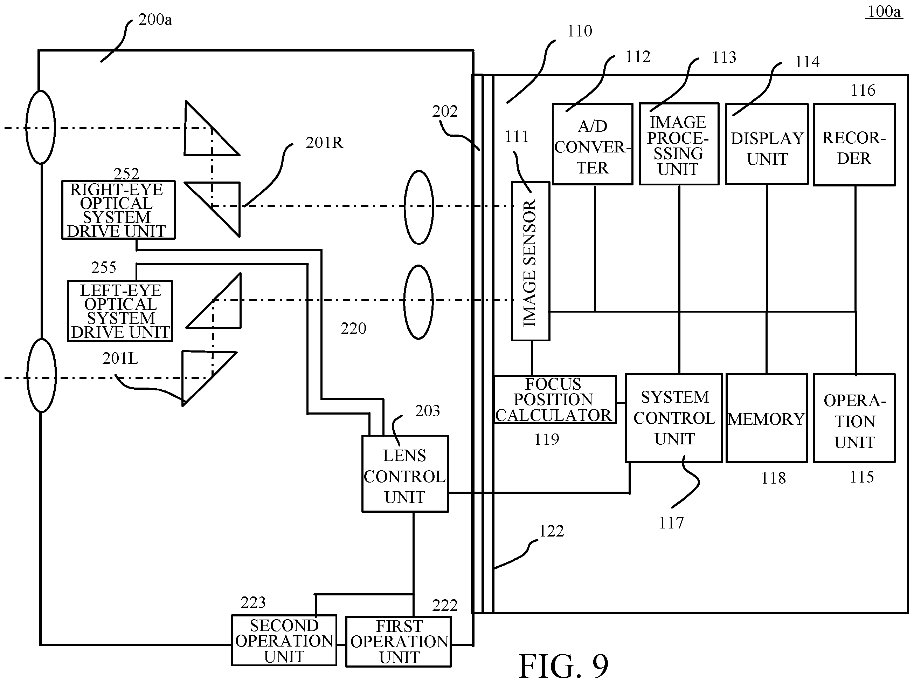

A description will now be given of a second embodiment of the present disclosure. FIG. 9 is a configuration diagram of an image pickup apparatus 100a according to this embodiment. The image pickup apparatus 100a includes a camera body 110 and a lens apparatus (interchangeable lens) 200a. The basic configuration of the camera body 110 is similar to that of the first embodiment, and a description thereof will be omitted. The lens apparatus 200a includes a right-eye optical system 201R and a left-eye optical system 201L that constitute an imaging optical system. In this embodiment, the right-eye optical system 201R and the left-eye optical system 201L can be independently driven during a focusing operation.

The right-eye optical system drive unit (first drive unit) 252 includes a first actuator 540 and independently drives the right-eye optical system 201R. The left-eye optical system drive unit (second drive unit) 255 includes a second actuator 400 and independently drives the left-eye optical system 201L. Similarly to the first embodiment, in a case where the user operates the first operation unit 222 or the second operation unit 223, the lens control unit 250 transmits a drive amount of the right-eye optical system 201R or the left-eye optical system 201L according to the operation amount by the user to the right-eye optical system drive unit 252 or the left-eye optical system drive unit 255.

At this time, a command for the moving amount by the operation of the first operation unit 222 is treated as a command to integrally drive the right-eye optical system 201R and the left-eye optical system 201L, and a command for the moving amount by the operation of the second operation unit 223 is treated as a command to drive the right-eye optical system 201R. Driving each of the two optical systems thus can achieve a focus shift between the two optical systems and focusing according to an object distance by operating the first operation unit 222 and the second operation unit 223. A structure that can movably hold each of the right-eye optical system 201R and the left-eye optical system 201L can be realized, for example, as follows. That is, a structure that can movably hold the right-eye optical system 201R relative to the lens top base 300 described with reference to FIG. 6 is applied to each of the right-eye optical system drive unit 252 and the left-eye optical system drive unit 255, and is implemented.

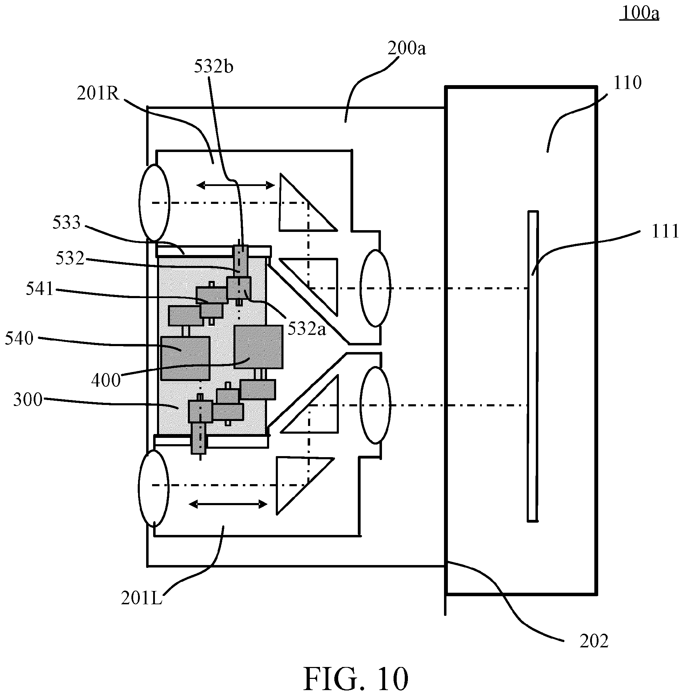

FIG. 10 is a sectional view of the image pickup apparatus 100a. As described above, the right-eye optical system 201R and the left-eye optical system 201L are held freely movably in the directions along the first optical axes OA1R and OA1L relative to the lens top base 300. In this embodiment, the lens top base 300 is directly fixed to a mount member that is connected to the camera body 110 or to another base member. Thus, the right-eye optical system 201R and the left-eye optical system 201L are supported movably relative to the fixed lens top base 300. In this embodiment, the first actuator 540 and the gear train that constitute the first drive unit, and the second actuator 400 and the gear train that constitute the second drive unit are disposed in the first area. Therefore, this embodiment can reduce the size of the lens apparatus 200a (image pickup apparatus 100a).

Each embodiment can provide a compact lens apparatus and image pickup apparatus having a plurality of bending optical systems.

While the disclosure has described example embodiments, it is to be understood that the disclosure is not limited to the example embodiments. The scope of the following claims is to be accorded the broadest interpretation so as to encompass all such modifications and equivalent structures and functions.

## Claims

1. A lens apparatus (200) comprising:
a first system (201R);
a second system (201L) disposed in parallel with the first system; and
a first drive unit (252) including an actuator configured to move at least one of the first system and the second system,
**characterized in that** each of the first system and the second system has, in order from an object side to an image side, a first axis (OA1R, OA1L), a second axis (OA2R, OA2L), and a third axis (OA3R, OA3L),
wherein a distance between the first axis of the first system and the first axis of the second system is longer than a distance between the third axis of the first system and the third axis of the second system, and
wherein at least a part of the first drive unit is disposed between the first axis of the first system and the first axis of the second system when viewed from a top side of the lens apparatus.

2. The lens apparatus according to claim 1, **characterized in that** at least the part of the first drive unit is disposed on the object side of the second axis.

3. The lens apparatus according to claim 1 or 2, **characterized in that** the first drive unit includes a first actuator.

4. The lens apparatus according to any one of claims 1 to 3, **characterized in that** the first drive unit drives at least one of the first system and the second system so as to adjust a focus position shift between the first system and the second system.

5. The lens apparatus according to any one of claims 1 to 4, further comprising a second drive unit (251) configured to integrally drive the first system and the second system.

6. The lens apparatus according to claim 5, **characterized in that** the second drive unit includes a second actuator.

7. The lens apparatus according to claim 5, **characterized in that** the second drive unit is disposed on the image side of the second axis.

8. The lens apparatus according to claim 1, **characterized in that** the actuator is configured to move the one of the first system and the second system,
wherein the lens apparatus further comprises a second drive unit (251) configured to drive the other of the first system and the second system.

9. The lens apparatus according to claim 8, **characterized in that** the second drive unit is disposed between the first axis of the first system and the first axis of the second system.

10. The lens apparatus according to any one of claims 1 to 9, **characterized in that** when viewed from a direction along the first axis, at least the part of the first drive unit is disposed between two tangents that are parallel to a line connecting the first axis of the first system and the first axis of the second system, and that are formed by connecting points on outer circumferences of two elements disposed closest to an object in the first system and the second system.

11. The lens apparatus according to any one of claims 1 to 10, further comprising a base member (300) that holds the first system and the second system,
**characterized in that** at least one of the first system and the second system is movable relative to the base member,
wherein the first drive unit is provided to the base member.

12. The lens apparatus according to any one of claims 1 to 11, **characterized in that** each of the first system and the second system includes a first lens provided on the first axis, a second lens provided on the second axis, and a third lens provided on the third axis.

13. The lens apparatus according to any one of claims 1 to 12, **characterized in that** each of the first system and the second system is a bending system configured to bend an incident light beam twice.

14. The lens apparatus according to any one of claims 1 to 13, **characterized in that** the second axis is orthogonal to the first axis.

15. The lens apparatus according to any one of claims 1 to 14, **characterized in that** the third axis is parallel to the first axis.

16. The lens apparatus according to any one of claims 1 to 15, further comprising a lens mount (202) for attachable to and detachable from a camera body that includes an image sensor.

17. The lens apparatus according to claim 16, **characterized in that** each of the first system and the second system includes a lens disposed on the third axis and provided inside the lens mount.

18. An image pickup apparatus (100) comprising:
an image sensor (111); and
the lens apparatus (200) according to any one of claims 1 to 17.

19. The pickup apparatus according to claim 18, **characterized in that** the sensor is a single image sensor configured to capture a first image formed by the first system and a second image formed by the second system that are arranged in parallel.

20. The pickup apparatus according to claim 18, **characterized in that** in the lens apparatus, the first drive unit drives at least one of the first system and the second system so as to adjust a focus position shift between the first system and the second system.
